Europäisches Patentamt

European Patent Office

Office européen des brevets

(19)

(11) **EP 0 511 055 B1**

(12) **FASCICULE DE BREVET EUROPEEN**

(45) Date de publication et mention
de la délivrance du brevet:
**15.01.1997 Bulletin 1997/03**

(51) Int Cl.⁶: **F16F 15/00**, F16F 13/00,
B64C 27/51, B64C 27/00,
F16F 7/10

(21) Numéro de dépôt: **92401078.8**

(22) Date de dépôt: **17.04.1992**

(54) **Barre élastique de liaison à système de contrôle actif des vibrations**

Elastisches Verbindungsglied für Aufhängungssystem mit aktiver Regelung

Elastic connecting rod for active suspension system

(84) Etats contractants désignés:
**DE ES GB IT NL SE**

(30) Priorité: **22.04.1991 FR 9104933**

(43) Date de publication de la demande:
**28.10.1992 Bulletin 1992/44**

(73) Titulaire: **HUTCHINSON**
**F-75008 Paris (FR)**

(72) Inventeurs:
• **Simon, Jean-Michel**
**F-92140 Clamart (FR)**

• **Gennesseaux, André**
**F-75012 Paris (FR)**

(74) Mandataire: **Picard, Jean-Claude Georges et al**
**Cabinet Plasseraud**
**84, rue d'Amsterdam**
**75009 Paris (FR)**

(56) Documents cités:
**EP-A- 0 129 363          EP-A- 0 233 792**
**EP-A- 0 290 181          EP-A- 0 334 716**
**EP-A- 0 335 786          WO-A-85/00208**
**DE-A- 3 009 747          GB-A- 2 080 919**
**GB-A- 2 149 473**

## Description

La présente présente invention concerne une barre élastique de liaison du type défini au préambule de la revendication 1.

Il pourra s'agir notamment, mais non exclusivement, d'une barre d'un ensemble de barres de liaison propres à relier le rotor d'un hélicoptère à la cellule.

Une solution connue dans les applications courantes consiste à utiliser des pièces de liaison déformables, la transmission des vibrations étant d'autant plus diminuée que la liaison est souple. Cependant il y a une limite à l'assouplissement des liaisons, liée aux mouvements relatifs admissibles entre les deux éléments, et dans certains cas, le niveau de vibration de la structure est encore très important.

Le document DE 3 009 747 décrit un support élastique pour moteur à combustion interne mettant en oeuvre, comme moyens de réglage de la raideur du ressort amortisseur, un système à réservoir de liquide et membranes qui est encombrant et compliqué, et qu'il serait impossible d'utiliser sur un hélicoptère.

Le document EP 0 335 786 décrit une barre élastique de liaison conforme au préambule de la revendication 1 et concerne une contre-fiche à résonateur hydromécanique, c'est-à-dire mettant en oeuvre un liquide amortisseur, ce qui a l'inconvénient de poser forcément des problèmes d'étanchéité.

Le but de la présente invention est de remédier à ces inconvénients de la technique antérieure, et à cet effet une barre de liaison du type général défini au début comportera les dispositions définies dans la partie caractérisante de la revendication 1.

Des modes de mise en oeuvre de l'invention sont décrits ci-dessous à titre d'exemples nullement limitatifs, avec référence aux figures du dessin ci-annexé dans lequel:

- la figure 1 est un schéma de montage montrant le principe d'un déphaseur dans un système vibrant ;
- les figures 2 et 3 sont des vues en demi-coupe axiale d'une barre élastique de liaison conforme à l'invention et mettant en oeuvre ce principe de déphaseur avec utilisation de lames élastiques, la figure 3 n'étant que la vue partielle d'une variante ;
- la figure 4 montre schématiquement, dans un plan radial, une came en spirale de réglage de raideur de ces lames ; et
- la figure 5 est une vue du système de réglage de la figure 4 en coupe transversale.

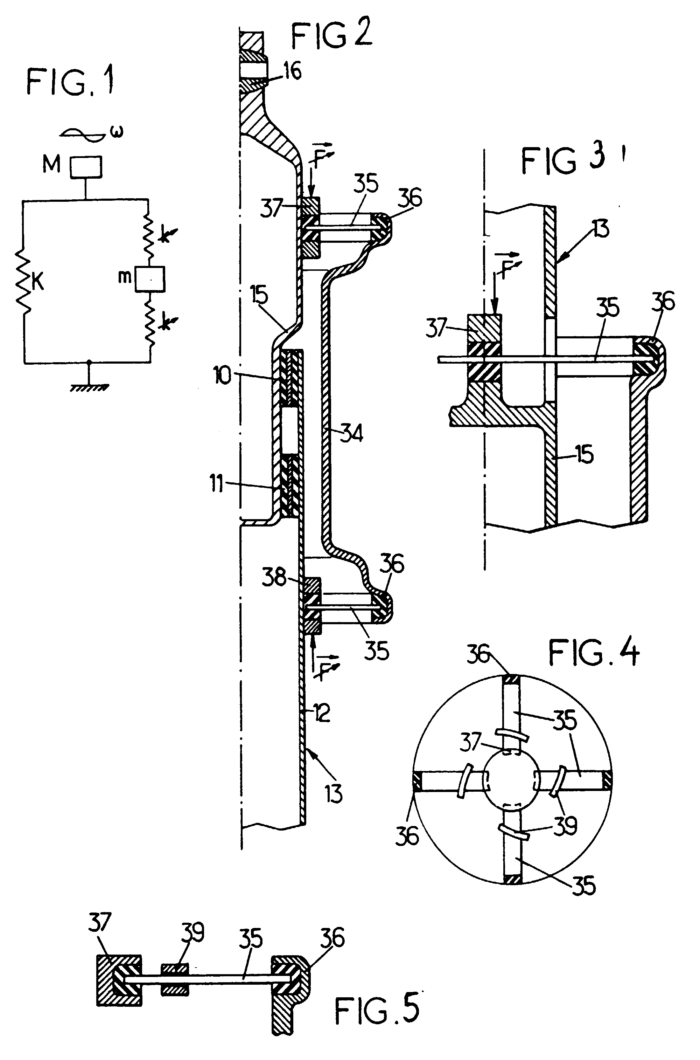

Le principe d'un déphaseur à masse battante a été schématisé à la figure 1. La source d'excitation vibratoire à pulsation $\omega$ agissant en M et la barre de liaison élastique à la structure étant représentée par sa raideur K, le déphaseur est fourni par le montage en parallèle d'une masse battante auxiliaire m en série avec des ressorts à raideur pilotable k.

Au-delà de sa fréquence propre, le système k, m, k se met en opposition de phase avec le système M, K, d'où une atténuation des vibrations transmises à la structure à protéger.

La surtension en amplitude du système est donnée par la formule connue suivante :

$$\lambda = [(\omega^2 / \omega_0^2 - 1)^2 + 4\,\varepsilon_0^2\,]^{-1/2}$$

dans laquelle $\omega_0$ est la pulsation à la résonance, et $\varepsilon_0$ est l'amortissement ($\varepsilon_0 = 1/2\ \mathrm{tg}\ \delta$), $\delta$ étant l'angle de déphasage.

Pour pouvoir minimiser la masse auxiliaire m, on a intérêt à obtenir la surtension maximale et donc à minimiser $\varepsilon_0$ et ($\omega - \omega_0$).

Les exemples numériques suivants montrent les influences respectives de $\omega/\omega_0$ et de $\mathrm{tg}\ \delta$ sur la valeur de la surtension en amplitude $\lambda$.

| $\omega / \omega_0$ | $\mathrm{tg}\ \delta$ | $\lambda$ |
|---|---|---|
| 1,1 | 0,05 | 4,6 |
| - | 0,02 | 4,8 |
| 1,05 | 0,05 | 8,8 |
| - | 0,02 | 9,6 |
| 1,02 | 0,05 | 15,6 |
| - | 0,01 | 24 |

Pour obtenir une bonne surtension en amplitude, on voit que $\omega_0$ doit en permanence suivre $\omega$ à quelques % près, et que l'amortissement doit être le plus faible possible.

Les modes de réalisation de l'invention qui vont être décrits ci-dessous ont pour objet de suivre la fréquence d'excitation en permanence, même lorsqu'elle est variable, par adaptation de la raideur du déphaseur, et d'utiliser des ressorts supplémentaires élastomère-métal ou élastomère composite pour minimiser l'amortissement, et ceci pour des courses maximales de quelques dizaines de mm, le tout devant être réalisé sous un minimum d'encombrement.

On obtient ces résultats avec les modes de réalisation des figures 2 et 3.

Dans la figure 2, on a montré l'utilisation de paliers élastiques référencés 10 et 11, la barre élastique - référencée globalement en 13 - comportant une partie tubulaire 12 reliée à une rotule d'extrémité (non représentée) et une partie tubulaire 15 reliée à l'autre rotule d'extrémité 16 et dont une partie de section plus faible est engagée coaxialement dans la partie tubulaire 12. Les deux paliers 10 et 11 sont adhérisés entre ces parties 12 et 15 en étant axialement espacés l'un de l'autre, ce qui procure les avantages suivants : on obtient une grande souplesse axiale avec une grande raideur radiale, du fait que le caoutchouc admet en cisaillement de plus grandes déformations qu'en compression. En écartant suffisamment les paliers en direction axiale, la barre pourra conserver une grande raideur vis-à-vis des efforts de flexion, et l'on évitera aussi tout risque de flambage. Ces caractéristiques particulièrement favorables des paliers élastiques peuvent d'ailleurs être encore accentuées en prévoyant qu'ils sont constitués chacun par un bloc d'élastomère annulaire lamifié, comme ceci a été représenté sur la figure 2. Les armatures sont coaxiales, et peuvent être cylindriques ou coniques.

La masse battante supplémentaire m du déphaseur de la figure 1 est constituée par la masse d'un tube 34 entourant la barre élastique 13 au niveau des paliers élastiques 10 et 11. La fonction des ressorts k du schéma de principe de la figure 1 est assurée par des lames de ressorts composites 35 radiales et encastrées d'une part entre des brides d'encastrement 36 du tube 34 et d'autre part des brides d'encastrement 37 et 38 montées respectivement sur les parties tubulaires 15 et 12 de la barre 13. La raideur des ressorts ainsi constitués peut par exemple être ajustée par mise en compression asservie des encastrements 37 et 38, par exemple au moyen de vérins pilotés symbolisés par les flèches F, agissant sur une partie mobile de l'encastrement.

Dans la variante de réalisation de la figure 3, on utilise une lame de ressort 35 traversant la barre 13 (s'étendant entre deux encastrements 36 diamétralement opposés), ce qui permet de réduire l'encombrement radial du système, un vérin F suffisant alors à assurer le réglage de la raideur de la lame, en comprimant ou en relâchant un encastrement mobile central 37 solidaire de la partie 15 de la barre. Un montage semblable pourrait être adopté de l'autre côté, pour la lame 35 reliant l'autre encastrement 36 à la partie 12 de la barre.

Il est à noter en outre que la masse 34 peut être guidée sur la barre 13 par des patins à faible frottement, en téflon ou analogue.

On comprend en tout cas que c'est à partir d'une comparaison entre les fréquences d'excitation et les fréquences de battement du système, que l'on commandera, grâce à un circuit d'asservissement approprié, les vérins de mise en compression des encastrements, pour régler la raideur des lames 35. L'acquisition de ces fréquences pourra se faire par l'intermédiaire d'accéléromètres.

On peut aussi envisager de régler la raideur k des lames 35 en faisant agir sur elles des butées 39 à position radiale variable, comme représenté sur les figures 4 et 5, ces butées étant agencées sur une came en spirale dont on pourra comander l'angle de rotation dans un sens ou dans l'autre également grâce à un circuit d'asservissement approprié. Dans ce cas, bien entendu, on pourra utiliser des encastrements 36 et 37 à pression constante.

D'autres butées (non représentées) permettent de limiter les déplacements de la masse 34 dans les deux sens.

## Revendications

1. Barre élastique de liaison (13) propre à être soumise, par l'une de ses extrémités, à des efforts vibratoires s'exerçant selon son axe et reliée par son autre extrémité à une structure qu'il convient d'isoler des vibrations, comportant une partie tubulaire (12) reliée à l'une desdites extrémités de la barre (13) et entourant une partie (15) de section plus faible reliée à l'extrémité opposée (16), ces deux parties (12, 15) étant reliées transversalement l'une à l'autre par au moins deux paliers élastiques axialement espacés (10, 11) adhérisés entre elles, cette barre (13) comportant entre les deux dites parties (12, 15), un déphaseur (34 à 37) dont la raideur est ajustée automatiquement en fonction de la fréquence de ses battements pour que sa fréquence de résonance coïncide avec la fréquence des vibrations d'excitation, de façon à obtenir une atténuation maximale de ces dernières, caractérisée en ce que ledit déphaseur est constitué d'une masse tubulaire extérieure (34) entourant lesdites parties (12, 15) de la barre, en leur étant respectivement reliée élastiquement par ses extrémités (36).

2. Barre élastique selon la revendication 1, caractérisée en ce que ledit déphaseur comporte, comme éléments élastiques à raideur ajustable, des lames de ressort radiales (35) à faible amortissement, encastrées entre ladite masse tubulaire extérieure (34) et respectivement l'une et l'autre desdites parties (12, 15) de ladite barre.

3. Barre élastique selon la revendication 2, caractérisée en ce que les moyens de réglage de la raideur desdites lames (35) du déphaseur comprennent des moyens de réglage de leur pression d'encastrement à au moins l'une (37) de leurs extrémités ou au milieu d'une lame (35) traversant ladite barre (13) et commune à deux encastrements (36) diamétralement opposés de ladite masse tubulaire (34).

4. Barre élastique selon la revendication 2, caractérisée en ce que les moyens de réglage de la raideur desdites lames (35) du déphaseur comprennent des butées (39) propres à s'appliquer en un point variable de leur longueur, ces butées pouvant être à cet effet agencées sur une came en spirale rotative.

## Patentansprüche

1. Elastischer Verbindungsstab (13), der an einem seiner Enden Schwingungskräften ausgesetzt werden kann, die sich entlang seiner Achse ausdehnen, während er an seinem anderen Ende mit einer Anordnung verbunden werden kann, die vor Schwingungen isoliert werden muß, wobei dieser Verbindungsstab einen röhrenförmigen Abschnitt (12) umfaßt, der an einem der Enden des Verbindungsstabes (13) befestigt ist, und wobei er einen Abschnitt (15) mit kleinerem Querschnitt umgibt, der am entgegengesetzten Ende (16) befestigt ist, während die beiden Abschnitte (12, 15) über wenigstens zwei elastische, axial mit Abstand zueinander angeordnete, zwischen ihnen befestigte Lager (10, 11) quer miteinander verbunden sind, wobei der Verbindungsstab (13) zwischen den beiden Abschnitten (12, 15) ein Phasenverschiebeelement (34 bis 37) aufweist, dessen Steifigkeit automatisch je nach der Frequenz der von ihm empfangenen Stöße so angepaßt wird, daß seine Resonanzfrequenz mit der Erregerschwingungsfrequenz übereinstimmt, wodurch eine optimale Dämpfung dieser Erregerschwingungen erzielt wird, dadurch gekennzeichnet, daß das Phasenverschiebeelement aus einer äußeren, röhrenförmigen Masse (34) besteht, welche die Abschnitte (12, 15) des Stabes umgibt und an ihren Enden (36) jeweils elastisch mit diesen Abschnitten verbunden ist.

2. Elastischer Verbindungsstab nach Anspruch 1, dadurch gekennzeichnet, daß das Phasenverschiebeelement als elastische Elemente mit einstellbarer Steifigkeit radiale Federplättchen (35) mit schwacher Dämpfung enthält, die jeweils zwischen der äußeren, röhrenförmigen Masse (34) und dem Abschnitt (12) bzw. dem Abschnitt (15) des Stabes gelagert sind.

3. Elastischer Verbindungsstab nach Anspruch 2, dadurch gekennzeichnet, daß die Mittel zur Einstellung der Steifigkeit der Plättchen (35) des Phasenverschiebeelements Mittel zur Einstellung ihres Lagerdruckes an wenigstens einem (37) ihrer Enden oder in der Mitte eines den Stab (12) durchquerenden Plättchens (35), das gleichzeitig zu zwei einander diametral gegenüberliegenden Lagerenden (36) der röhrenförmigen Masse (34) gehört, aufweisen.

4. Elastischer Verbindungsstab nach Anspruch 2, dadurch gekennzeichnet, daß die Mittel zur Einstellung der Steifigkeit der Plättchen (35) des Phasenverschiebeelements Widerlager (39) umfassen, die sich an einem beliebigen Punkt längs der Plättchen anlegen lassen, wobei diese Widerlager zu diesem Zweck mit Hilfe eines drehbaren Spiralnockens ausgerichtet werden können.

**Claims**

1. A elastic connecting bar (13) which is apt to be subjected, through one of its ends, to vibrational loads exerted along its axis and which is linked by its other end to a structure which it is expedient to isolate from vibrations, wherein the bar includes a tubular part (12) linked to one of said ends of the bar and surrounding a part (15) of smaller section linked to the opposite end (16), and wherein these two parts (12, 15) are transversely linked to one another by at least two axially spaced bearings (10, 11) clasped between them, this connecting bar (13) comprising, between the two said parts (12, 15), a phase-shifter (34 to 37) whose stiffness is automatically adjusted according to the frequency of its pulsations, so that its resonant frequency coincides with the frequency of the excitatory vibrations, to obtain maximum attenuation of these vibrations, characterized in that said phase-shifter comprises an exterior tubular mass (34) surrounding the said parts (12, 15) of said bar, this tubular mass (34) being elastically connected respectively to said parts (12, 15) by its ends (36).

2. The bar of claim 1, characterized in that said phase-shifter, includes, as elastic elements with adjustable stiffness, radial spring leaves (35) with weak damping, which are rigidly mounted between said exterior tubular mass (34) and respectively one and the other of said parts (12, 15) of said bar.

3. The bar of claim 2, characterized in that the means of regulating the stiffness of said leaves (35) of the phase-shifter comprise means of regulating their rigid mounting pressure at least one (37) of their ends or in the middle of a leaf (35) traversing said bar (13) and common to two diametrically opposed rigid-mounts (36) of said tubular mass (34).

4. The bar of claim 2, characterized in that the means of regulating the stiffness of said leaves (35) of the phase-shifter comprise stops (39) apt to be applied at a variable point of their length, it being possible to this effect for these stops to be laid out over a rotary spiral cam.

FIG.1

FIG 2

FIG 3

FIG.4

FIG.5